# EUROPEAN PATENT SPECIFICATION

(11) **EP 3 208 459 B1**
(45) Date of publication and mention of the grant of the patent: **02.09.2020**
(21) Application number: 15850951.3
(22) Date of filing: 18.03.2015
(51) Int. Cl.: F03D 1/06, F03D 3/06, B29K 105/08, B29C 70/22, B29K 307/04, B29L 31/08, B29K 63/00, B29C 70/44

(54) **LARGE-SIZE WIND POWER BLADE HAVING MULTI-BEAM STRUCTURE AND MANUFACTURING METHOD THEREFOR**
GROSSFORMATIGE WINDKRAFTSCHAUFEL MIT MEHRTRÄGERSTRUKTUR UND HERSTELLUNGSVERFAHREN DAFÜR
PALE D'ÉNERGIE ÉOLIENNE DE GRANDE TAILLE COMPORTANT UNE STRUCTURE À POUTRES MULTIPLES ET SON PROCÉDÉ DE FABRICATION

(30) Priority: 15.10.2014 CN 201410542873
(43) Date of publication of application: 23.08.2017
(73) Proprietor: Zhuzhou Times New Material Technology Co., Ltd., Zhuzhou, Hunan 412007 (CN)
(72) Inventor: FENG, Xuebing, Zhuzhou Hunan 412007 (CN); PENG, Chaoyi, Zhuzhou Hunan 412007 (CN); ZENG, Jingcheng, Zhuzhou Hunan 412007 (CN); DENG, Hang, Zhuzhou Hunan 412007 (CN); YANG, Fubiao, Zhuzhou Hunan 412007 (CN); ZHANG, Ziqian, Zhuzhou Hunan 412007 (CN)
(74) Representative: Keil & Schaafhausen Patentanwälte PartGmbB
(86) International application number: PCT/CN2015/074497
(87) International publication number: WO 2016/058325

(56) References cited:
- WO-A1-2010/065928
- WO-A1-2014/079456
- CN-A- 101 463 794
- CN-A- 101 769 230
- CN-A- 102 235 316
- CN-A- 102 918 262
- CN-A- 103 249 543
- CN-Y- 201 165 932
- GB-A- 2 497 578
- US-A1- 2013 149 154
- US-A1- 2013 189 114

## Description

### Technical Field:

The current invention is related with components of a wind power equipment and its manufacture method, especially related with a large-size wind power blade with a multi-beam structure and an improved method for its manufacture.

### Technical Background:

It is well known that the wind power blades are becoming larger and larger. Even with the same output, the size of the blades is becoming larger and longer. With the change of the size of the blades, the blades are longer and softer. In order to meet the requirements of rigidity, strength and stability, it is necessary to add structure layers, especially to add structure layers close to the blade tip. This leads to an increase of the weight of the blade, and the weight center is more close to the blade tip, and the frequency is lower. In the meantime, with the increase of the weight, fatigue load will also increase, especially the increase of the fatigue load along the shimmy direction is very obvious.

In order to reduce the load of the blade, a most common way is to change the material of the main load-carrying structure of the blade, such as to use high strength, high modulus fiber to replace normal glass fibers, in order to reduce the weight of the blades and hence the load of the blade. However, structurally, the common layer method would lead to new problems. For example, when the width of the crossbeam of the blade does not change, and the commonly used glass fiber is replaced with carbon fiber, the thickness of the crossbeam is reduced and the stability of the blade structure is compromised. As a result, it is important to find a scientific and reasonable way to reduce the weight of the blade with the aerodynamic configuration unchanged, so that the frequency of the blade is increased, the fatigue load of the blade is reduced, which is of importance for the design and big sized, elongated blade structure.

The relevant state of the art is as follows:
1. The patent application, CN201010106039. 3, with the title "Multi-beam structure glass fiber reinforced plastic vierendeel vane of megawatt wind generator and producing method thereof", discloses a multi-beam structure glass fiber reinforced plastic vierendeel vane of a megawatt wind generator, which comprises two blade shells, main beams fixed at the inner sides of the cane shells. The improvement is that: a plurality of ribs are distributed at intervals along the long direction of the blade shells. The ribs are in a ring shape; and the upper side surfaces and the lower side surfaces of the ribs are glued with the inner coating of the blade shells and the main beams to be fixed. Original total-stress blades are changed into small area stress by a vierendeel rib structure, torque force is strengthened by the vierendeel rib structure, and the blade strength is improved. Thus, foams do not need to filled, and the blade quality is largely reduced, so the vierendeel rib structure is constructed on a megawatt wind generator cane, the difficulty that the blade is made big and long is significantly reduced. The main beams of the blade and the blade shells are poured into a shape by an integrative way.
2. The Chinese patent application, CN201120483523.8, with the title of "a 2.0MW carbon fiber wind turbine blades," discloses a 2.0MW carbon fiber wind turbine blades. The blade is made of glass fiber. In the middle of the blade shell, carbon fiber main beams and glass fiber secondary beams are placed on both sides. Between the carbon fiber main beam and the glass fiber secondary beams is filled with light wood, and the carbon fiber main beam as well as the glass fiber secondary beams form a duplex " 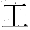 " structure using double shear web. Since the carbon fibers of the present invention provide sufficient strength, the problem of having too much and too thick glass fiber of conventional blade layer is overcome, and the amount of resin used has been reduced, which can reduce the weight of about 2000Kg. In the meantime, the blade does not have pre-bending, which is more convenient for transportation, and improves aerodynamic efficiency. Cpmax maximum can reach 0.49, which increases output generated. In addition, due to the high stiffness of the blade, it is difficult for the blade to collide the tower during operation, and therefore more safe.

The Chinese patent application, CN201010532996.2, with the title "wind power blade", discloses provides a wind driven generator blade. The wind driven generator blade is made of composite material, and the composite material comprises multiple fiber layers and a base material attached to the multiple fiber layers; and the fiber layers comprise carbon fibers and glass fibers, and the volume ratio of the carbon fibers to the glass fibers is 1:4-4:1. The fiber layers in the wind driven generator blade comprise at least two kinds of fibers, namely the carbon fibers and the glass fibers, wherein the carbon fibers have the advantages of high strength and light weight; and the glass fibers have the advantage of good toughness, and have good interface wetness with resin.

The patent application, GB2497578 A, discloses a reinforcing structure 9 for a wind turbine blade. The reinforcing structure 9 is in the form of an elongate stack 26 of layers 30 of pultruded fibrous composite strips supported within a U-shaped channel 27. The length of each layer 30 can be different and the ends of each layer are chamfered to create a taper at the ends of the stack, which may also be coated with a thin flexible pultruded fibrous composite strip 32. The reinforcing structure may extend along a curved path within the outer shell of the blade. During assembly of the blade components within a mould 36, the reinforcing structure is introduced into the mould by sliding the channel along the surface of an elongate wedge 28 within the mould along the curved path. The regions of the outer shell of the blade on either side of the reinforcing structure are filled with structural foam 17, and the reinforcing structure and the foam are both sandwiched between an inner skin 24 and an outer skin.

The patent application, US 2013189114 A1, discloses a method for manufacturing a wind turbine blade, comprising the steps of pre-manufacturing a first blade member, positioning said pre-manufactured first blade member in a joining mold and bonding said first blade member with a second blade member using a vacuum assisted infusion process so as to form an integrated blade part.

The patent application, WO 2014079456 A1, discloses a method of making a spar cap 146 for a wind turbine blade as well as a method for producing a wind turbine blade containing the spar cap 146. The turbine blade comprises a windward shell 148 and a leeward shell, each manufactured in respective half-moulds 150. During manufacture of each shell 148, an outer skin 152 in the form of a dry fiber material is first placed on a surface of the half-mould 150. The strips 100 are then positioned in the mould 150. Next, a layer of structural foam 154 is introduced into the half-mould 150 to fill the regions between the spar caps 146. An inner skin 156, in the form of a dry fiber material, is then placed on the upper surfaces of the spar caps 146 and the structural foam 154. The components are covered with an airtight bag 158 to form an evacuation chamber encapsulating all of the components.

The patent application, US 2013149154 A1 discloses a wind turbine blade having a lightning protection function includes an outer shell, a spar arranged in a space inside the outer shell, a spar cap which is formed by a carbon-fiber plastic laminated member disposed on a blade root side and a glass-fiber plastic laminated member disposed on a blade tip side that are connected together, the spar cap supporting the spar to the outer shell, and a lightning protection unit. The lightning protection unit includes a receptor for receiving lightning which is provided in the outer shell on a side where the glass-fiber plastic laminated member is arranged, a down conductor which directs lightning current received by the receptor into the ground or the water, and a conductive metal member which covers the outer shell on a side where the carbon fiber plastic laminated member is arranged.

In the above patent applications, the multi-beam structure of the first patent application contains 2 beams, and the whole structure is not quite relevant to the present invention. In the blade structure of the second patent application, there are two main beams and two secondary beams, wherein the secondary beams are made of glass fiber cloth, which is different from the carbon fiber layer of all of the four main beams of the present invention. Although the third patent application mentions the use of carbon fiber, it is mixed with glass fiber, and the blade is made with the mixture. This does not change the safety of the whole structure and does not solve the stability issue of the blade structure. In addition, the production costs are increased, which is not good for its wide distribution. Therefore, it is important to reasonably take advantage of the characteristics of carbon fibers, and to increase the load carrying capability of the large size wind power blade and to ensure the stability of the structure at the same time, and to reasonably reduce the weight of the blade.

### Content of the Invention:

The technical problem to be solved by the present invention is to provide a large size and elongated wind power blade with reduced weight, increased blade frequency, reduced blade load and reduced production costs, as well as the manufacture method thereof.

The problem is solved by a large-size wind power blade with a multi-beam structure, wherein the blade adopts a hollow layout structure and comprises a blade skin suction edge, a blade skin pressure edge, a main load-carrying structure crossbeam and anti-shearing webs, wherein the blade skin suction edge and the blade skin pressure edge are combined to form a cavity structure having a streamlined cross section, wherein a support structure formed by the combination of the main load-carrying structure crossbeam and the anti-shearing web is located in the cavity, characterized in that both the blade skin suction edge and the blade skin pressure edge adopt a multi-segment combined structure, wherein the multiple segments are connected to the side surface of the main load-carrying structure crossbeam to integrally form the blade skin suction edge and the skin pressure edge.

Further, the main load-carrying structure cross beam is composed of four blade crossbeams, wherein the blade skin suction edge is provided with a first blade crossbeam and a second blade crossbeam, and the blade skin pressure edge is provided with a third blade crossbeam and a fourth blade crossbeam, and the four blade crossbeams are laterally connected with the blade skin suction edge and the blade skin pressure edge, so that the four blade crossbeams become part of the blade skin suction edge and the blade skin pressure edge.

Further, the connection between the four blade crossbeams and the blade skin suction edge as well as the blade skin pressure edge is cohesive connection, wherein the two sides of each of the four blade crossbeams are connected with the sides of the blade skin suction edge and the blade skin pressure edge respectively via uniform cross section and through resin adhesive.

Further, the multi-segment combined structure is that the blade skin suction edge and the blade skin pressure edge are divided into three segments respectively, which are the front sections of the blade skin suction edge and the blade skin pressure edge, the middle sections between the crossbeams, and the tail sections of the blade skin suction edge and the blade skin pressure edge.

Further, the sections between the crossbeams are provided with sandwich structure, wherein the thickness of the sandwich is optimum determined by stability calculation according to the blade load.

Further, the anti-shearing web plates are placed in the middle part of the blade crossbeam corresponding with the blade skin suction edge and the blade skin pressure edge, so that the four blade crossbeams form two " 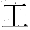 " shaped supporting crossbeams.

Further, the tail sections of the blade skin suction edge and the blade skin pressure edge are provided with trailing edge force bearing structure trabeculae respectively, wherein the trailing edge force bearing structure trabeculae are connected with the middle segment of the tail sections of the blade skin suction edge and the blade skin pressure edge respectively to form part of the tail sections of the blade skin suction edge and the blade skin pressure edge.

Further, the trailing edge force bearing structure trabeculae are cohesively connected with the blade skin suction edge and the blade skin pressure edge, wherein the two sides of the trailing edge force bearing structure trabeculae are connected with the sides of the tail sections of the blade skin suction edge and the blade skin pressure edge via glue respectively.

Further, the four blade crossbeams and the trailing edge force bearing structure trabeculae are laid with carbon fiber layer and solidified, wherein the surface density of carbon fiber cloth is smaller than the surface density of the glass fiber cloth.

A method to manufacture the above described large-size wind power blade with a multi-beam structure, using multi-beam hollow structure to make the blades, providing a plurality of main load-carrying structure crossbeams in the blade skin suction edge and the blade skin pressure edge which are supported by the anti-shearing web, so that a wind power blade with cavity structure whose cross section is streamline is formed, characterized in that both the blade skin suction edge and the blade skin pressure edge adopt a multi-segment combined structure, wherein the blade skin suction edge and the blade skin pressure edge are divided into a plurality of segments and are manufactured separately, and the segments adhesively connected with the main load-carrying structure crossbeams from the side respectively, so that the blade skin suction edge and the blade skin pressure edge with multiple segments are formed.

Further, the main load-carrying structure cross beam is composed of four blade crossbeams, wherein the blade skin suction edge is provided with a first blade crossbeam and a second blade crossbeam, and the blade skin pressure edge is provided with a third blade crossbeam and a fourth blade crossbeam, and the tail sections of the blade skin suction edge and the blade skin pressure edge are provided with trailing edge force bearing structure trabeculae respectively, wherein the four blade crossbeams are laterally connected with the blade skin suction edge and the blade skin pressure edge, so that the four blade crossbeams become part of the blade skin suction edge and the blade skin pressure edge, and the four blade crossbeams are first manufactured and are cohesively connected with the anti-shearing web to form a " 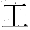 " form crossbeam, the crossbeam is then placed in the positioning equipment and is laid and infused together with the blade skin suction edge and the blade skin pressure edge, and epoxy resin is used as infusion resin to realize solidification via vacuum infusion.

Further, the tail sections of the blade skin suction edge and the blade skin pressure edge are provided with trailing edge force bearing structure trabeculae respectively, wherein the trailing edge force bearing structure trabeculae are connected with the middle segment of the tail sections of the blade skin suction edge and the blade skin pressure edge respectively to form part of the tail sections of the blade skin suction edge and the blade skin pressure edge.

Further, the trailing edge force bearing structure trabeculae are cohesively connected with the blade skin suction edge and the blade skin pressure edge, wherein the two sides of the trailing edge force bearing structure trabeculae are connected with the sides of the tail sections of the blade skin suction edge and the blade skin pressure edge via glue respectively.

Further, the four blade crossbeams and the trailing edge force bearing structure trabeculae are laid with carbon fiber layer and solidified, wherein the surface density of carbon fiber cloth is smaller than the surface density of the glass fiber cloth, and epoxy resin is used as infusion resin to realize solidification via vacuum infusion.

In comparison with the state of the art, the advantages of the present invention are: the present invention provides a blade manufacture method as well as its structure, wherein the multi-segment skin is connected with the profiles of the blade crossbeams. In this way, the force bearing condition of the skin can be changed efficiently, the width of the crossbeam is reduced, and the layer thickness of the blade crossbeam is increased. According to the different force carrying condition, different skin for different segment is made. Sandwich structure is used in the section between crossbeams, in order to increase the stability of the whole blade structure. Under the premise of ensuring the structural rigidity and strength, the weight of the blade is reduced, the frequency of the blade is increases and the load of the blade is decreased. In addition, the problem of instability caused by the high strength and high modulus material is solved. The present invention is suitable for the manufacture of large size and elongated wind power blade, which significantly reduces the weight as well as the load of the blade.

### Figures:

Fig. 1 shows the cross section of the blade of the present invention.
Fig. 2 shows the structure along the blade of the present invention (suction edge).
Fig. 3 shows the structure along the blade of the present invention (pressure edge).

In the figures:
1. Suction edge close to the front edge crossbeam; 2. Suction edge close to the trailing edge crossbeam; 3. Suction edge close to trailing edge trabeculae; 4. Pressure edge close to front edge crossbeam; 5. Pressure edge close to trailing edge crossbeam; 6. Pressure edge close to trailing edge trabeculae; 7. Front edge web plate; 8. Trailing edge web plate; 9. Section between crossbeams of the suction edge; 10. Section between crossbeams of the pressure edge; 11. Blade skin suction edge; 12. Blade skin pressure edge.

### Embodiments:

The present invention is further illustrated with the following figures and embodiments.

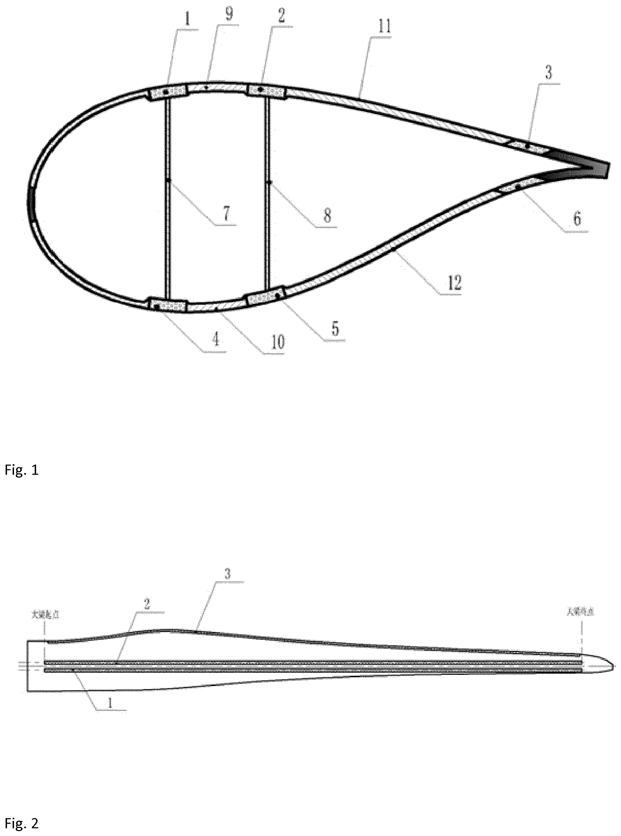

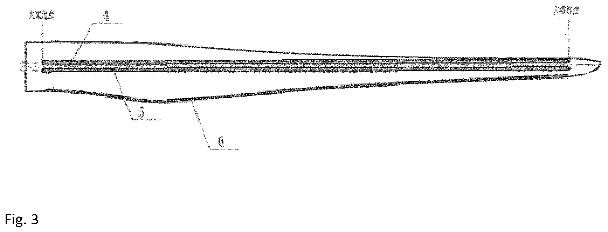

Fig. 1 shows the cross section of the blade of the present invention. Fig. 2 and Fig. 3 show the structure along the blade shell of the present invention.

A large-size wind power blade with a multi-beam structure, wherein the blade adopts a hollow layout structure and comprises a blade skin suction edge (11), a blade skin pressure edge (12), a main load-carrying structure crossbeam (1, 2, 4, 5) and anti-shearing web (7,8), trailing edge force bearing structure trabeculae (3, 6). The main load-carrying structure cross beam (1, 2, 4, 5) is composed of four blade crossbeams. The width of the blade structure crossbeam is 0.31m, and the total length of the crossbeam is 52.51m. The crossbeam is provided with one-way carbon fiber layer, namely 0° fiber is identical with the central line of the crossbeam. The surface density of the carbon fiber cloth is 600g/m².

The sections 9 between the suction edge crossbeams and the sections 10 between the pressure edge crossbeams are provided with sandwich structure, wherein the width of the sandwich is 0.20m. The sandwich is made of carbon fiber cloth and the thickness of the sandwich is optimum determined by stability calculation according to the blade load.

In the current embodiment, in order to reduce the weight of the blade, the four blade crossbeams of the blade skin suction edge and the blade skin pressure edge are laid with carbon fiber layer and solidified, wherein the surface density of carbon fiber cloth is smaller than the surface density of the glass fiber cloth. In a preferred embodiment, the surface density of the carbon fiber cloth is 600g/m², and the surface density of the glass fiber cloth is 1215g/m². Preferably, epoxy resin is used as infusion resin to realize solidification via vacuum infusion.

In comparison with the usage of sole glass fiber cloth in state of the art, the present invention replaces the glass fiber of the crossbeams with the carbon fiber cloth which has a smaller surface density, so that the weight of the blade is reduced significantly.

In the present invention, the blade crossbeams are first manufactured. The anti-shearing web plate is cohesively connected in the middle position of the inner surface of the blade structure crossbeam. The crossbeam is then placed in the positioning equipment. In the positioning equipment, the sandwich structure, the skin and the crossbeams are laid and infused together. The blade skin suction edge and the blade skin pressure edge form multi-segment combination structure, wherein the multiple segments are connected to the side surface of the main load-carrying structure crossbeam to integrally form the blade skin suction edge and the skin pressure edge, and are combined with the blade structure crossbeam and the anti-shearing web, so that a wind power blade with cavity structure whose cross section is streamline is formed.

With the same wind field level, the characteristics of the blade of the current invention is compared with the characteristics of the blade in the state of the art, as shown in Fig. 1. The suction edge crossbeam and the pressure edge crossbeam of the state of the art are both infused with glass fiber/epoxy resin.

| | Blade in state of the art | Blade of the current invention |
|---|---|---|
| Blade length/m | 57.7 | 57.7 |
| Wind field level | IEC 3A | IEC 3A |
| Generated output | 3.0MW | 3.0MW |
| quantity/kg | 17443 | 13748 |
| Mass center/m | 17.40 | 15.50 |
| One order flap/Hz | 0.56 | 0.67 |
| One order lag motion/Hz | 0.98 | 1.17 |
| Blade root limit load/KNm | 16730 | 15408 |
| Blade root fatigue load /KNm | 7498 | 6591 |

As shown in Fig. 1, the one order flag and the one order lag motion of the blade of the present invention are significantly bigger than those of the blade of the state of the art. In addition, the blade root limit load and blade root fatigue load of the blade of the present invention are lower than those of the blade of the state of the art. This means that the load produced by the blade of the current invention is very small, which improves the safety of the whole machine.

From the above examples, the current invention is related with a method to manufacture the large-size wind power blade with a multi-beam structure as well as the wind power blade, using multi-beam hollow structure to make the blades, providing a plurality of main load-carrying structure crossbeams in the blade skin suction edge and the blade skin pressure edge which are supported by the anti-shearing web, so that a wind power blade with cavity structure whose cross section is streamline is formed, characterized in that both the blade skin suction edge and the blade skin pressure edge adopt a multi-segment combined structure, wherein the blade skin suction edge and the blade skin pressure edge are divided into a plurality of segments and are manufactured separately, and the segments adhesively connected with the main load-carrying structure crossbeams from the side respectively, so that the blade skin suction edge and the blade skin pressure edge with multiple segments are formed.

Further, the main load-carrying structure cross beam is composed of four blade crossbeams, wherein the blade skin suction edge is provided with a first blade crossbeam and a second blade crossbeam, and the blade skin pressure edge is provided with a third blade crossbeam and a fourth blade crossbeam, and the tail sections of the blade skin suction edge and the blade skin pressure edge are provided with trailing edge force bearing structure trabeculae respectively, wherein the four blade crossbeams are laterally connected with the blade skin suction edge and the blade skin pressure edge, so that the four blade crossbeams become part of the blade skin suction edge and the blade skin pressure edge, and the four blade crossbeams are first manufactured and are cohesively connected with the anti-shearing web to form a " 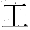 " form crossbeam, the crossbeam is then placed in the positioning equipment and is laid and infused together with the blade skin suction edge and the blade skin pressure edge, and epoxy resin is used as infusion resin to realize solidification via vacuum infusion.

Further, the tail sections of the blade skin suction edge and the blade skin pressure edge are provided with trailing edge force bearing structure trabeculae respectively, wherein the trailing edge force bearing structure trabeculae are connected with the middle segment of the tail sections of the blade skin suction edge and the blade skin pressure edge respectively to form part of the tail sections of the blade skin suction edge and the blade skin pressure edge.

Further, the trailing edge force bearing structure trabeculae are cohesively connected with the blade skin suction edge and the blade skin pressure edge, wherein the two sides of the trailing edge force bearing structure trabeculae are connected with the sides of the tail sections of the blade skin suction edge and the blade skin pressure edge via glue respectively.

Further, the four blade crossbeams and the trailing edge force bearing structure trabeculae are laid with carbon fiber layer and solidified, wherein the surface density of carbon fiber cloth is smaller than the surface density of the glass fiber cloth, and epoxy resin is used as infusion resin to realize solidification via vacuum infusion.

A large-size wind power blade with a multi-beam structure, wherein the blade adopts a hollow layout structure and comprises a blade skin suction edge, a blade skin pressure edge, a main load-carrying structure crossbeam and an anti-shearing web, wherein the blade skin suction edge and the blade skin pressure edge are combined to form a cavity structure having a streamlined cross section, wherein a support structure formed by the combination of the main load-carrying structure crossbeam and the anti-shearing web is located in the cavity, characterized in that both the blade skin suction edge and the blade skin pressure edge adopt a multi-segment combined structure, wherein the multiple segments are connected to the side surface of the main load-carrying structure crossbeam to integrally form the blade skin suction edge and the skin pressure edge.

Further, the main load-carrying structure cross beam is composed of four blade crossbeams, wherein the blade skin suction edge is provided with a first blade crossbeam and a second blade crossbeam, and the blade skin pressure edge is provided with a third blade crossbeam and a fourth blade crossbeam, and the four blade crossbeams are laterally connected with the blade skin suction edge and the blade skin pressure edge, so that the four blade crossbeams become part of the blade skin suction edge and the blade skin pressure edge.

Further, the connection between the four blade crossbeams and the blade skin suction edge as well as the blade skin pressure edge is cohesive connection, wherein the two sides of each of the four blade crossbeams are connected with the sides of the blade skin suction edge and the blade skin pressure edge respectively via uniform cross section and through resin adhesive. That is to say, the profiles of the blade skin suction edge and the blade skin pressure edge close to the blade crossbeams are the same as the profiles of the blade crossbeams, and form a bell mouth shaped opening of the blade skin suction edge and the blade skin pressure edge, in order to ensure a stable cohesive connection between the blade crossbeam and the blade skin suction edge as well as the blade skin pressure edge.

Further, the multi-segment combined structure is that the blade skin suction edge and the blade skin pressure edge are divided into three segments respectively, which are the front sections of the blade skin suction edge and the blade skin pressure edge, the middle sections between the crossbeams, and the tail sections of the blade skin suction edge and the blade skin pressure edge.

Further, the sections between the crossbeams are provided with sandwich structure, wherein the thickness of the sandwich is optimum determined by stability calculation according to the blade load.

Further, the anti-shearing web plates are placed in the middle part of the blade crossbeam corresponding with the blade skin suction edge and the blade skin pressure edge, so that the four blade crossbeams form two " 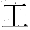 " shaped supporting crossbeams.

The tail sections of the blade skin suction edge and the blade skin pressure edge are provided with trailing edge force bearing structure trabeculae respectively, wherein the trailing edge force bearing structure trabeculae are connected with the middle segment of the tail sections of the blade skin suction edge and the blade skin pressure edge respectively to form part of the tail sections of the blade skin suction edge and the blade skin pressure edge.

Further, a large-size wind power blade with a multi-beam structure according to an example related to the present disclosure, is such that the trailing edge force bearing structure trabeculae are cohesively connected with the blade skin suction edge and the blade skin pressure edge, wherein the two sides of the trailing edge force bearing structure trabeculae are connected with the sides of the tail sections of the blade skin suction edge and the blade skin pressure edge via glue respectively.

Further, the four blade crossbeams and the trailing edge force bearing structure trabeculae are laid with carbon fiber layer and solidified, wherein the surface density of carbon fiber cloth is smaller than the surface density of the glass fiber cloth.

In comparison with the state of the art, the advantages of the present invention are: the present invention provides a blade manufacture method as well as its structure, wherein the multi-segment skin is connected with the profiles of the blade crossbeams. In this way, the force bearing condition of the skin can be changed efficiently, the width of the crossbeam is reduced, and the layer thickness of the blade crossbeam is increased. According to the different force carrying condition, different skin for different segment is made. Sandwich structure is used in the section between crossbeams, in order to increase the stability of the whole blade structure. Under the premise of ensuring the structural rigidity and strength, the weight of the blade is reduced, the frequency of the blade is increases and the load of the blade is decreased. In addition, the problem of instability caused by the high strength and high modulus material is solved. The present invention is suitable for the manufacture of large size and elongated wind power blade, which significantly reduces the weight as well as the load of the blade.

## Claims

1. A wind power blade with a multi-beam structure, wherein the blade is provided with a hollow layout structure and comprises a blade skin suction edge (11), a blade skin pressure edge (12), main load-carrying structure crossbeams (1, 2, 4, 5) and anti-shearing webs (7, 8), wherein the blade skin suction edge (11) and the blade skin pressure edge (12) are combined to form a cavity structure having a streamlined cross section, wherein a support structure formed by the combination of the main load-carrying structure crossbeams (1, 2, 4, 5) and the anti-shearing webs (7, 8) is located in the cavity, wherein both the blade skin suction edge and the blade skin pressure edge feature a multi-segment combined structure respectively, wherein the multi-segment combined structure is that the blade skin suction edge and the blade skin pressure edge are divided into three segments respectively, which are the front sections of the blade skin suction edge and the blade skin pressure edge, the middle sections (9, 10) between the crossbeams, and the tail sections of the blade skin suction edge and the blade skin pressure edge, and the multiple segments are connected to the side surface of the main load-carrying structure crossbeams (1, 2, 4, 5) to integrally form the blade skin suction edge (11) and the skin pressure edge (12), wherein the main load-carrying structure cross beam is composed of four blade crossbeams (1, 2, 4, 5), wherein the blade skin suction edge is provided with a first blade crossbeam (1) and a second blade crossbeam (2), and the blade skin pressure edge is provided with a third blade crossbeam (4) and a fourth blade crossbeam (5), and the four blade crossbeams (1, 2, 4, 5) are laterally connected with the blade skin suction edge and the blade skin pressure edge, so that the four blade crossbeams (1, 2, 4, 5) become part of the blade skin suction edge (11) and the blade skin pressure edge (12), **characterized in that** the connection between the four blade crossbeams (1, 2, 4, 5) and the blade skin suction edge as well as the blade skin pressure edge is cohesive connection, wherein the two sides of each of the four blade crossbeams (1, 2, 4, 5) are connected with the sides of the blade skin suction edge and the blade skin pressure edge respectively via uniform cross section and through resin adhesive, and the tail sections of the blade skin suction edge and the blade skin pressure edge are provided with trailing edge force bearing structure trabeculae (3, 6) respectively, wherein the trailing edge force bearing structure trabeculae (3, 6) are connected with the middle segment of the tail sections of the blade skin suction edge and the blade skin pressure edge respectively to form part of the tail sections of the blade skin suction edge and the blade skin pressure edge, wherein the trailing edge force bearing structure trabeculae (3, 6) are cohesively connected with the blade skin suction edge and the blade skin pressure edge, wherein the two sides of the trailing edge force bearing structure trabeculae (3, 6) are connected with the sides of the tail sections of the blade skin suction edge and the blade skin pressure edge via glue respectively.

2. A method to manufacture the wind power blade with a multi-beam structure according to claim 1, using multi-beam hollow structure to make the blades, providing a plurality of main load-carrying structure crossbeams (1, 2, 4, 5) in the blade skin suction edge (11) and the blade skin pressure edge (12) which are supported by the anti-shearing webs (7, 8), so that a wind power blade with cavity structure whose cross section is streamline is formed, **characterized in that** both the blade skin suction edge (11) and the blade skin pressure edge (12) feature a multi-segment combined structure, wherein the blade skin suction edge and the blade skin pressure edge are divided into a plurality of segments and are manufactured separately, and the segments adhesively connected with the main load-carrying structure crossbeams (1, 2, 4, 5) from the side respectively, so that the blade skin suction edge (11) and the blade skin pressure edge (12) with multiple segments are formed.

3. The method to manufacture the wind power blade with a multi-beam structure according to claim 2, **characterized in that** the main load-carrying structure cross beam is composed of four blade crossbeams (1, 2, 4, 5), wherein the blade skin suction edge is provided with a first blade crossbeam (1) and a second blade crossbeam (2), and the blade skin pressure edge is provided with a third blade crossbeam (4) and a fourth blade crossbeam (5), and the tail sections of the blade skin suction edge and the blade skin pressure edge are provided with trailing edge force bearing structure trabeculae (3, 6) respectively, wherein the four blade crossbeams (1, 2, 4, 5) are laterally connected with the blade skin suction edge and the blade skin pressure edge, so that the four blade crossbeams (1, 2, 4, 5) become part of the blade skin suction edge (11) and the blade skin pressure edge (12), and the four blade crossbeams (1, 2, 4, 5) are first manufactured and are cohesively connected with the anti-shearing web (7, 8) to form a " 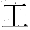 " form crossbeam, the crossbeam is then placed in the positioning equipment and is laid and infused together with the blade skin suction edge and the blade skin pressure edge, and epoxy resin is used as infusion resin to realize solidification via vacuum infusion.

4. The method to manufacture the wind power blade with a multi-beam structure according to claim 3, **characterized in that** the tail sections of the blade skin suction edge and the blade skin pressure edge are provided with trailing edge force bearing structure trabeculae (3, 6) respectively, wherein the trailing edge force bearing structure trabeculae (3, 6) are connected with the middle segment of the tail sections of the blade skin suction edge and the blade skin pressure edge respectively to form part of the tail sections of the blade skin suction edge and the blade skin pressure edge.

5. The method to manufacture the wind power blade with a multi-beam structure according to claim 4, **characterized in that** the four blade crossbeams (1, 2, 4, 5) and the trailing edge force bearing structure trabeculae (3, 6) are laid with carbon fiber layer and solidified, wherein the surface density of carbon fiber cloth is smaller than the surface density of the glass fiber cloth, and epoxy resin is used as infusion resin to realize solidification via vacuum infusion.

## Patentansprüche

1. Windkraftschaufel mit einer Mehrträgerstruktur, wobei das Schaufel mit einer Hohlraum-Struktur versehen ist und eine Saugkante an der Schaufeloberfläche (11), eine Druckkante an der Schaufeloberfläche (12), Hauptlast tragende Struktur-Querträger (1, 2, 4, 5) und Anti-Scher-Stege (7, 8) aufweist, wobei die Saugkante an der Schaufeloberfläche (11) und die Druckkante an der Schaufeloberfläche (12) kombiniert sind, um eine Hohlraumstruktur mit einem stromlinienförmigen Querschnitt zu bilden, wobei eine Stützstruktur, die durch die Kombination der Querträger (1, 2, 4, 5) der Hauptlast tragenden Struktur und der Anti-Scher-Stege (7, 8) gebildet wird, in dem Hohlraum angeordnet ist, wobei sowohl die Saugkante an der Schaufeloberfläche als auch die Druckkante an der Schaufeloberfläche jeweils eine kombinierte Mehrsegmentstruktur aufweisen, wobei die kombinierte Multisegmentstruktur darin besteht, dass die Saugkante an der Schaufeloberfläche und die Druckkante an der Schaufeloberfläche jeweils in drei Segmente unterteilt sind, welche die vorderen Abschnitte der Saugkante an der Schaufeloberfläche und der Druckkante an der Schaufeloberfläche, die mittleren Abschnitte (9, 10) zwischen den Querbalken und die Endabschnitte der Saugkante an der Schaufeloberfläche und der Druckkante an der Schaufeloberfläche sind, und die mehreren Segmente mit der Seitenfläche der Hauptquerträger (1, 2, 4, 5) der lasttragenden Struktur verbunden sind, um die Hautansaugkante (11) des Schaufeles und die Hautdruckkante (12) integral auszubilden, wobei der Hauptquerträger der lasttragenden Struktur aus vier Querträgern (1, 2, 4, 5) des Schaufeles besteht, wobei die Hautansaugkante des Schaufeles mit einem ersten Querträger (1) des Schaufeles und einem zweiten Querträger (2) des Schaufeles versehen ist, und die Hauptdruckkante mit einem dritten Schaufelquerträger (4) und einem vierten Schaufelquerträger (5) versehen ist, und die vier Schaufelquerträger (1, 2, 4, 5) seitlich mit Saugkante an der Schaufeloberfläche und der Druckkante an der Schaufeloberfläche verbunden sind, so dass die vier Schaufelquerträger (1, 2, 4, 5) Teil der Saugkante an der Schaufeloberfläche (11) und der Druckkante an der Schaufeloberfläche (12) werden, **dadurch gekennzeichnet, dass** die Verbindung zwischen den vier Schaufelquerträgern (1, 2, 4, 5) und der Saugkante an der Schaufeloberfläche sowie der Druckkante an der Schaufeloberfläche eine kohäsive Verbindung ist, wobei die beiden Seiten jedes der vier Schaufelquerträger (1, 2, 4, 5) mit den Seiten der Saugkante an der Schaufeloberfläche bzw. der Druckkante an der Schaufeloberfläche über einen gleichmäßigen Querschnitt und durch Harzkleber verbunden sind, und die hinteren Aschnitte der Saugkante an der Schaufeloberfläche und der Druckkante an der Schaufeloberfläche jeweils mit Hinterkantenkraft-Tragstrukturtrabekeln (3, 6) versehen sind, wobei die Hinterkantenkraft-Tragstrukturtrabekeln (3, 6) mit dem mittleren Segment der hinteren Abschnitte der Saugkante an der Schaufeloberfläche bzw. der Druckkante an der Schaufeloberfläche verbunden sind, um einen Teil der hinteren Abschnitte der Saugkante an der Schaufeloberfläche und der Druckkante an der Schaufeloberfläche zu bilden, wobei die die Hinterkantenkraft tragenden Strukturtrabekeln (3, 6) kohäsiv mit der Saugkante an der Schaufeloberfläche und der Druckkante an der Schaufeloberfläche verbunden sind, wobei die beiden Seiten der Hinterkantenkraft tragenden Strukturtrabekeln (3, 6) mit den Seiten der Endabschnitte der Saugkante an der Schaufeloberfläche bzw. der Druckkante an der Schaufeloberfläche über Klebstoff verbunden sind.

2. Verfahren zur Herstellung des Windkraftschaufeles mit einer Mehrträgerstruktur nach Anspruch 1, unter Verwendung einer Mehrträger-Hohlstruktur zur Herstellung der Blätter, wobei eine Vielzahl von Querbalken (1, 2, 4, 5) der Hauptlast tragenden Struktur in der Saugkante an der Schaufeloberfläche (11) und der Druckkante an der Schaufeloberfläche (12) vorgesehen werden, die von den Anti-Scherstegen (7, 8) getragen werden, so dass ein Windkraftschaufel mit Hohlraumstruktur gebildet wird, dessen Querschnitt stromlinienförmig ist, **dadurch gekennzeichnet, dass** sowohl die Saugkante an der Schaufeloberfläche (11) als auch die Druckkante an der Schaufeloberfläche (12) eine kombinierte Multisegmentstruktur aufweisen, wobei die Saugkante an der Schaufeloberfläche und die Druckkante an der Schaufeloberfläche in eine Vielzahl von Segmenten unterteilt und separat hergestellt sind und die Segmente jeweils von der Seite her mit den Querträgern (1, 2, 4, 5) der tragenden Hauptstruktur verklebt sind, so dass die Saugkante an der Schaufeloberfläche (11) und die Druckkante an der Schaufeloberfläche (12) mit mehreren Segmenten gebildet werden.

3. Verfahren zur Herstellung des Windkraftschaufeles mit einer Mehrträgerstruktur nach Anspruch 2, **dadurch gekennzeichnet, dass** der Hauptquerträger der lasttragenden Struktur aus vier Schaufel-Querträgern (1, 2, 4, 5) besteht, wobei die Saugkante an der Schaufeloberfläche mit einem ersten Schaufel-Querträger (1) und einem zweiten Schaufel-Querträger (2) versehen ist, und die Druckkante an der Schaufeloberfläche (mit einem dritten Schaufel-Querträger (4) und einem vierten Schaufel-Querträger (5) versehen ist, und die Endabschnitte der Saugkante an der Schaufeloberfläche und der Druckkante an der Schaufeloberfläche jeweils mit Hinterkantenkraft tragenden Strukturtrabekeln (3, 6) versehen sind, wobei die vier Schaufel-Querträger (1, 2, 4, 5) seitlich mit der Saugkante an der Schaufeloberfläche und der Druckkante an der Schaufeloberfläche verbunden sind, so dass die vier Schaufel-Querträger (1, 2, 4, 5) Teil der Saugkante an der Schaufeloberfläche (11) und der Druckkante an der Schaufeloberfläche (12) werden, die vier Schaufel-Querträger (1, 2, 4, 5) zunächst hergestellt und kohäsiv mit dem Anti-Scher-Steg (7,8) verbunden werden, zur Bildung eines " 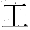 "-Formquerträgers der Querträger dann in die Positioniervorrichtung gelegt und zusammen mit der Saugkante an der Schaufeloberfläche und der Druckkante an der Schaufeloberfläche gelegt und infundiert wird, und wobei Epoxidharz als Infusionsharz verwendet wird, um die Verfestigung durch Vakuuminfusion zu realisieren.

4. Verfahren zur Herstellung des Windkraftschaufeles mit einer Mehrträgerstruktur nach Anspruch 3, **dadurch gekennzeichnet, dass** die hinteren Abschnitte der Saugkante an der Schaufeloberfläche und der Druckkante an der Schaufeloberfläche jeweils mit Hinterkantenkraft tragenden Strukturtrabekeln (3, 6) versehen werden, wobei die Hinterkantenkraft tragenden Strukturtrabekeln (3, 6) mit dem mittleren Segment der hinteren Abschnitte der Saugkante an der Schaufeloberfläche bzw. der Druckkante an der Schaufeloberfläche verbunden werden, um einen Teil der hinteren Abschnitte der Saugkante an der Schaufeloberfläche und der Druckkante an der Schaufeloberfläche zu bilden.

5. Verfahren zur Herstellung des Windkraftschaufeles mit einer Mehrträgerstruktur nach Anspruch 4, **dadurch gekennzeichnet, dass** die vier Schaufeltraversen (1, 2, 4, 5) und die Trabekel (3, 6) der die Hinterkantenkraft tragenden Struktur mit einer Kohlefaserschicht belegt und verfestigt werden, wobei die Oberflächendichte des Kohlefasergewebes kleiner als die Oberflächendichte des Glasfasergewebes ist und Epoxidharz als Infusionsharz verwendet wird, um die Verfestigung durch Vakuuminfusion zu realisieren.

## Revendications

1. Pale d'éolienne avec une structure à barres multiples, dans laquelle la pale est dotée d'une structure de configuration creuse et comprend un bord d'extrados de revêtement de pale (11), un bord d'intrados de revêtement de pale (12), des barres transversales de structure porteuse de charge principales (1, 2, 4, 5) et des nervures anti-cisaillement (7, 8), dans laquelle le bord d'extrados de revêtement de pale (11) et le bord d'intrados de revêtement de pale (12) sont combinés pour former une structure à cavité ayant une section transversale aérodynamique, dans laquelle une structure de support formée par la combinaison des barres transversales de structure de support de charge principales (1, 2, 4, 5) et des nervures anti-cisaillement (7, 8) est située dans la cavité, dans laquelle à la fois le bord d'extrados de revêtement de pale et le bord d'intrados de revêtement de pale présentent respectivement une structure combinée à segments multiples, dans laquelle la structure combinée à segments multiples réside en ce que le bord d'extrados de revêtement de pale et le bord d'intrados de revêtement de pale sont divisés respectivement en trois segments qui sont les sections avant du bord d'extrados de revêtement de pale et du bord d'intrados de revêtement de pale, les sections du milieu (9, 10) entre les barres transversales, et les sections de queue du bord d'extrados de revêtement de pale et du bord d'intrados de revêtement de pale, et les segments multiples sont reliés à la surface latérale des barres transversales de structure porteuse de charge principales (1, 2, 4, 5) pour former d'un seul tenant le bord d'extrados de revêtement de pale (11) et le bord d'intrados de revêtement de pale (12), dans laquelle la barre transversale de structure porteuse de charge principale se compose de quatre barres transversales de pale (1, 2, 4, 5), dans laquelle le bord d'extrados de revêtement de pale est doté d'une première barre transversale de pale (1) et d'une deuxième barre transversale de pale (2), et le bord d'intrados de revêtement de pale est doté d'une troisième barre transversale de pale (4) et d'une quatrième barre transversale de pale (5), et les quatre barres transversales de pale (1, 2, 4, 5) sont reliées latéralement au bord d'extrados de revêtement de pale et au bord d'intrados de revêtement de pale de sorte que les quatre barres transversales de pale (1, 2, 4, 5) deviennent une partie du bord d'extrados de revêtement de pale (11) et du bord d'intrados de revêtement de pale (12), **caractérisée en ce que** la liaison entre les quatre barres transversales de pale (1, 2, 4, 5) et le bord d'extrados de revêtement de pale tout comme le bord d'intrados de revêtement de pale est une liaison cohésive, dans laquelle les deux côtés de chacune des quatre barres transversales de pale (1, 2, 4, 5) sont reliés aux côtés du bord d'extrados de revêtement de pale et du bord d'intrados de revêtement de pale respectivement via une section transversale uniforme et grâce à un adhésif résineux, et les sections de queue du bord d'extrados de revêtement de pale et du bord d'intrados de revêtement de pale sont dotées respectivement de travées de structure de support de force (3, 6), dans laquelle les travées de structure de support de force de bord arrière (3, 6) sont reliées au segment du milieu des sections de queue respectivement du bord d'extrados de revêtement de pale et du bord d'intrados de revêtement de pale pour former une partie des sections de queue du bord d'extrados de revêtement de pale et du bord d'intrados de revêtement de pale, dans laquelle les travées de structure de support de force de bord arrière (3, 6) sont reliées de manière cohésive au bord d'extrados de revêtement de pale et au bord d'intrados de revêtement de pale, dans laquelle les deux côtés des travées de structure de support de force de bord arrière (3, 6) sont reliés aux côtés des sections de queue du bord d'extrados de revêtement de pale et du bord d'intrados de revêtement de pale respectivement via de la colle.

2. Procédé pour fabriquer la pale d'éolienne avec une structure à barres multiples selon la revendication 1, utilisant une structure creuse à barres multiples pour former les pales, fournissant une pluralité de barres transversales de structure porteuse de charge (1, 2, 4, 5) dans le bord d'extrados de revêtement de pale (11) et le bord d'intrados de revêtement de pale (12) qui sont supportées par les nervures anti-cisaillement (7, 8) de manière à ce qu'une pale d'éolienne avec une structure à cavité dont la section transversale est aérodynamique est formée, **caractérisé en ce qu'**à la fois le bord d'extrados de revêtement de pale (11) et le bord d'intrados de revêtement de pale (12) présentent une structure combinée à segments multiples, dans lequel le bord d'extrados de revêtement de pale et le bord d'intrados de revêtement de pale sont divisés en une pluralité de segments et sont fabriqués séparément, et les segments sont reliés de façon adhésive aux barres transversales de structure porteuse de charge principales (1, 2, 4, 5) respectivement depuis le côté, de sorte que le bord d'extrados de revêtement de pale (11) et le bord d'intrados de revêtement de pale (12) avec des segments multiples sont formés.

3. Procédé de fabrication de la pale d'éolienne avec une structure à barres multiples selon la revendication 2, **caractérisé en ce que** la barre transversale de structure porteuse de charge principale se compose de quatre barres transversales de pale (1, 2, 4, 5), dans lequel le bord d'extrados de revêtement de pale est doté d'une première barre transversale de pale (1) et d'une deuxième barre transversale de pale (2), et le bord d'intrados de revêtement de pale est doté d'une troisième barre transversale de pale (4) et d'une quatrième barre transversale de pale (5), et les sections de queue du bord d'extrados de revêtement de pale et du bord d'intrados de revêtement de pale sont dotées respectivement de travées de structure de support de force de bord arrière (3, 6), dans lequel les quatre barres transversales de pale (1, 2, 4, 5) sont reliées latéralement au bord d'extrados de revêtement de pale et au bord d'intrados de revêtement de pale de manière à ce que les quatre barres transversales de pale (1, 2, 4, 5) deviennent une partie du bord d'extrados de revêtement de pale (11) et du bord d'intrados de revêtement de pale (12), et les quatre barres transversales de pale (1, 2, 4, 5) sont d'abord fabriquées et reliées de manière cohésive à la nervure anti-cisaillement (7, 8) pour former une barre transversale en forme de « 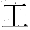 », la barre transversale est ensuite placée dans l'équipement de positionnement et est posée et infusée ensemble avec le bord d'extrados de revêtement de pale et le bord d'intrados de revêtement de pale, et de la résine époxy est utilisée en tant que résine d'infusion pour réaliser une solidification via infusion sous vide.

4. Procédé de fabrication de pale d'éolienne avec une structure à barres multiples selon la revendication 3, **caractérisé en ce que** les sections de queue du bord d'extrados de revêtement de pale et du bord d'intrados de revêtement de pale sont dotées respectivement de travées de structure de support de force de bord arrière (3, 6), dans lequel les travées de structure de support de force de bord arrière (3, 6) sont reliées au segment du milieu des sections de queue respectivement du bord d'extrados de revêtement de pale et du bord d'intrados de revêtement de pale pour former une partie des sections de queue du bord d'extrados de revêtement de pale et du bord d'intrados de revêtement de pale.

5. Procédé de fabrication de pale d'éolienne avec une structure à barres multiples selon la revendication 4, **caractérisé en ce que** les quatre barres transversales (1, 2, 4, 5) et les travées de structure de support de force de bord arrière (3, 6) sont posées avec une couche de fibres de carbone et solidifiées, dans lequel la densité de surface de la toile à fibres de carbone est inférieure à la densité de surface de la toile à fibres de verre, et une résine époxy est utilisée en tant que résine d'infusion pour réaliser une solidification via infusion sous vide.
